# EUROPÄISCHE PATENTSCHRIFT

(11) **EP 1 364 110 B1**
(45) Veröffentlichungstag und Bekanntmachung des Hinweises auf die Patenterteilung: **29.12.2004**
(21) Anmeldenummer: 02708228.8
(22) Anmeldetag: 09.02.2002
(51) Int. Cl.: F01N 11/00, F02D 41/02

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF DE COMMANDE D'UN MOTEUR A COMBUSTION INTERNE

(30) Priorität: 23.02.2001 DE 10108720
(43) Veröffentlichungstag der Anmeldung: 26.11.2003
(73) Patentinhaber: ROBERT BOSCH GMBH, 70442 Stuttgart (DE)
(72) Erfinder: SCHALLER, Johannes, 71229 Leonberg (DE)
(86) Internationale Anmeldenummer: PCT/DE2002/000478
(87) Internationale Veröffentlichungsnummer: WO 2002/066802

(56) Entgegenhaltungen:
- EP-A- 0 383 187
- EP-A- 0 901 809
- US-A- 5 722 236

## Beschreibung

### Stand der Technik

Die Erfindung betrifft ein Verfahren und eine Vorrichtung zur Steuerung einer Brennkraftmaschine.

Verfahren und Vorrichtung zur Steuerung einer Brennkraftmaschine sind bekannt. Häufig werden Brennkraftmaschinen, insbesondere Dieselbrennkraftmaschinen mit Abgasnachbehandlungssystemen ausgerüstet, die insbesondere einen Partikelfilter umfassen können. Zur Regeneration des Partikelfilters sind Temperaturen oberhalb der üblichen Abgastemperaturen notwendig. Ohne zusätzliche Maßnahmen oxidieren die Partikel bei ca. 550 bis 600 °C. Durch Kombination des Partikelfilters mit einem Oxidationskatalysator, durch katalytische Beschichtung des Filters und/oder durch eine Aditivzugabe lässt sich die untere Temteraturschwelle für die Oxidation auf ca. 250 bis 350 °C absenken.

Erreicht der Partikelfilter eine gewisse Beladung und ist eine Regeneration des Filters wegen des Motorbetriebszustandes nicht gewährleistet, so ist vorgesehen, dass die Abgastemperatur soweit erhöht wird, dass die Partikel schnell abbrennen. In diesem Fall wird durch die Oxidation so viel Wärme frei, dass der Partikelfilter und das Abgas sich weiter erwärmen. Dadurch wird die Oxidation weiter beschleunigt, die Filtererwärmung wird noch größer und kann unter Umständen zur Beschädigung des Filters führen.

Eine überkritische Erwärmung des Filters kann auch auftreten, wenn die Betriebsweise des Motors während der Regeneration geändert wird. Ein plötzlicher Übergang zum Schubbetrieb oder ein Übergang in den Leerlaufbetrieb entziehen dem Partikelfilter die notwendige Abkühlung durch den hohen Abgasvolumenstrom bzw. erhöhen die Abbrandgeschwindigkeit durch ein verstärktes Angebot an Sauerstoff im Abgasstrom.

### Vorteile der Erfindung

Dadurch, dass ausgehend von Betriebskenngrößen, die den Zustand der Brennkraftmaschine und/oder den Zustand des Abgasnachbehandlungssystems charakterisieren, eine Kenngröße bestimmt wird, die die Intensität einer Reaktion im Abgasnachbehandlungssystem charakterisiert, und dass bei Überschreiten eines Schwellwertes durch die Kenngröße, Maßnahmen zur Reduzierung der Reaktionsgeschwindigkeit eingeleitet werden, ist es möglich, eine unkontrollierte Reaktion im Abgasnachbehandlungssystem sicher zu verhindern. Insbesondere kann bei einem Partikelfilter eine ungewollte Erhitzung des Partikelfilters während der Regenerationsphase derart begrenzt werden, dass Beschädigungen des Filters sicher auszuschließen sind.

Besonders vorteilhaft ist es, wenn die Kenngröße eine Reaktionstemperatur und/oder eine Temperaturänderung charakterisiert, die durch die Reaktion im Abgasnachbehandlungssystem bewirkt wird. Das heißt als Kenngröße, wird eine Temperaturgröße verwendet, die die bei einer möglichen Reaktion erreichbare Endtemperatur und/oder die auf Grund der Reaktion erreichten Temperaturerhöhung charakterisiert. Diese Kenngröße wird dabei ausgehend von Betriebskenngrößen der Brennkraftmaschine und/oder des Abgasnachbehandlungssystems bestimmt. Daher sind keine zusätzlichen Sensoren notwendig.

Als wesentliche Größen ausgehend von denen die Kenngröße bestimmt wird, sind Größen, die einen Beladungszustand des Abgasnachbehandlungssystems, eine Abgastemperatur, eine Luftmenge und/oder einer Abbrandgeschwindigkeit charakterisieren. Diese Größen haben den größten Einfluß auf die Reaktion und/oder die erreichte Temperatur im Abgasnachbehandlungssystem.

Die Größe, die Abbgrandgeschwindigkeit charakterisiert, ist ausgehend von Größen vorgebbar, die einen Sauerstoffgehalt im Abgas und/oder die Abgastemperatur charakterisieren. Diesen Größen liegen in der Steuereinrichtung vor und/oder können ohne großen Aufwand aus anderen Größen ermittelt werden.

Zur Reduzierung der Reaktionsgeschwindigkeit ist vorgesehen, dass das Sauerstoffangebots im Abgas begrenzt wird.

Dies läßt sich besonders einfach und effektiv dadurch erreichen, dass die der Brennkraftmaschine zugeführte Frischluftmenge reduziert wird und/oder dass Kraftstoff zugemessen wird, der keinen Beitrag zum Drehmoment liefert.

Weitere vorteilhafte und zweckmäßige Ausgestaltungen und Weiterbildungen der Erfindung sind in den Unteransprüchen gekennzeichnet.

### Zeichnung

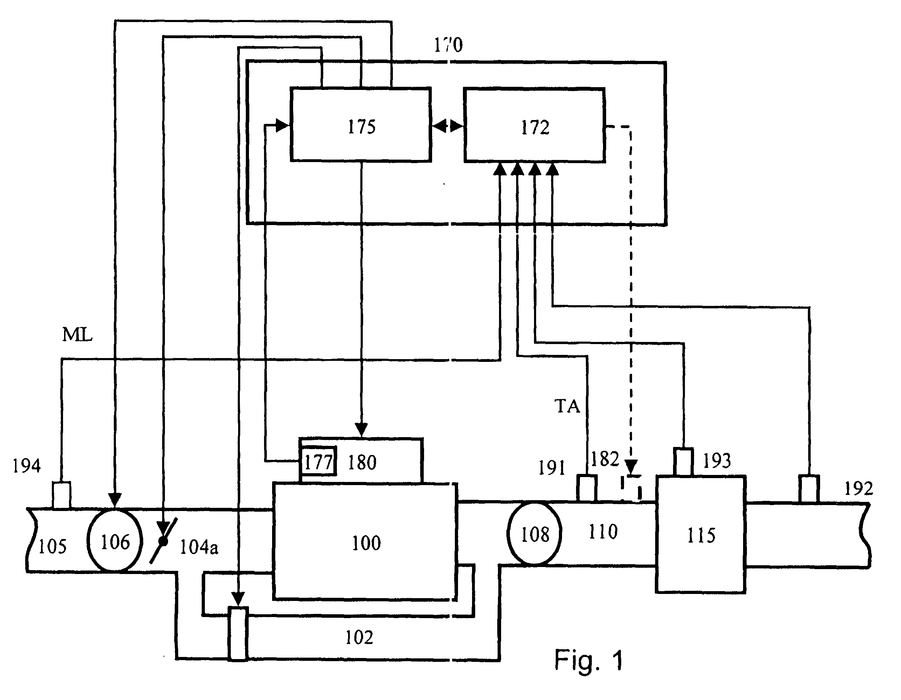

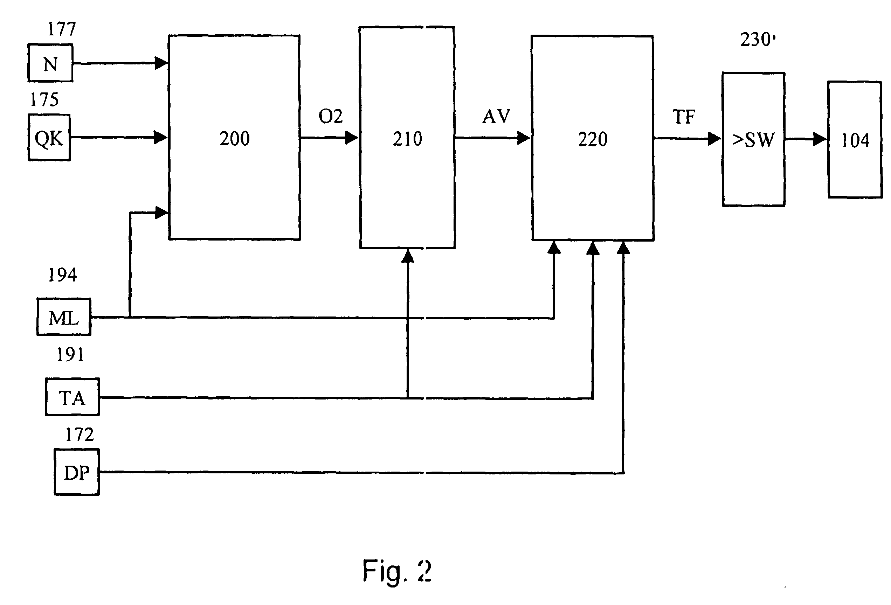

Die Erfindung wird nachstehend anhand der in der Zeichnung dargestellten Ausführungsformen erläutert. Es zeigen Figur 1 ein Diagramm eines Systems zur Steuerung einer Brennkraftmaschine, Figur 2 ein Ablaufdiagramm des erfindungsgemäßen Verfahrens.

### Beschreibung der Ausführungsbeispiele

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 tauscht mit der Motorsteuereinheit 175 Signale aus. Bei einer Ausgestaltung beaufschlagt die Abgasnachbehandlungssteuereinheit 172 ein Stellelement 182, das in der Abgasleitung vor dem Abgasnachbehandlungssystem oder im Abgasnachbehandlungssystem angeordnet ist, mit Ansteuersignalen.

Desweiteren können verschiedene Sensoren vorgesehen sein, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigsten ein vierter Sensor 193 liefert Signale, die den Zustand des Abgasnachbehandlungssystems 115 charakterisieren. Desweiteren liefert wenigstens ein Sensor 192 Signale, die den Zustand der Abgase nach dem Abgasnachbehandlungssystem charakterisieren. Vorzugsweise werden Sensoren, die Temperaturwerte und/oder Druckwerte erfassen verwendet. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Bei der dargestellten Ausführungsform ist in der Ansaugleitung 105 ein Verdichter 106 und in der Abgasleitung 110 eine Turbine 108 angeordnet. Die Turbine wird durch das durchströmende Abgas angetrieben und treibt über eine nicht dargestellte Welle den Verdichter 106 an. Durch geeignete Ansteuerung kann die Luftmenge, die der Verdichter verdichtet, gesteuert werden.

Ferner ist in der Ansaugleitung 105 eine Drosselklappe 104a angeordnet, mit der die Zufuhr von Frischluft in die Brennkraftmaschine beeinflußbar ist. Die Drosselklappe 104a ist ebenfalls von der Steuereinheit 175 ansteuerbar.

Ferner kann die Leitung 110 über eine Abgasrückführleitung 102 mit der Ansaugleitung 105 verbunden. In der Abgasrückführleitung 102 ist ein Abgasrückführventil 104b angeordnet, das ebenfalls von der Steuereinheit 175 ansteuerbar ist.

Bei der dargestellten Ausführungsform ist eine Drosselklappe, eine Abgasrückführung und ein steuerbarer Abgasturbolader vorgesehen. Erfindungsgemäß kann auch lediglich eine Drosselklappe oder eine Abgasrückführung vorgesehen sein.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperaturund/oder verschiedenen Druckwerten zu ermitteln. Desweiteren können noch weitere Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Zur Reduzierung der Stickoxide von Verbrennungsmotoren ist eine Abgasrückführung vorgesehen. Der Anteil an rückgeführten Abgasen bzw. die Luftmenge, die der Brennkraftmaschine zugeführt wird, muss genau eingestellt werden, da bei einer zu hohen Abgasrückführrate die Partikelemissionen ansteigen, andererseits bei einer zu geringen Abgasrückführrate die NOₓ-Emissionen zunehmen. Um dies zu erreichen ist üblicherweise eine vom Betriebspunkt abhängige Steuerung und/oder Regelung der Abgasrückführrate vorgesehen.

Erfindungsgemäß ist vorgesehen, dass die Konzentration von Sauerstoff im Abgas erfasst wird. Die Konzentration von Sauerstoff bzw. der Volumenstrom von Sauerstoff kann beispielsweise mittels einer Lambda-Sonde gemessen werden und/oder aus Betriebsparametern des Motors berechnet bzw. simuliert werden. So kann beispielsweise der Sensor 191 als Lambdasonde ausgebildet sein. Dem Sauerstoffangebot im Abgas kommt eine erhebliche Bedeutung für die Abbrandgeschwindigkeit zu.

Erfindungsgemäß wird aus dem Beladungszustand und dem Sauerstoffgehalt im Abgas ermittelt, ob das Abgasnachbehandlungssystem durch eine zu schnellen Oxidation beschädigt werden kann. Wenn diese Möglichkeit gegeben ist, wird der Sauerstoffgehalt des Abgases gezielt reduziert, um die Abbrandgeschwindigkeit zu begrenzen.

Hierzu stehen verschiedene Möglichkeiten zur Verfügung. Zum einen kann vorgesehen sein, dass die Abgasrückführrate erhöht, dass eine Drosselklappe im Ansaugtrakt der Brennkraftmaschine geschlossen oder zumindestens teilweise geschlossen wird, und/oder dass zusätzlich Kraftstoff eingespritzt wird, der den Sauerstoffgehalt reduziert, aber keinen Beitrag zum Drehmoment liefert.

In Figur 2 ist die erfindungsgemäße Vorgehensweise beispielhaft dargestellt. Bereits in Figur 1 beschriebene Elemente sind mit entsprechenden Bezugszeichen bezeichnet. Der Sensor 177, der an der Einspritzeinrichtung 180 bzw. an der Brennkraftmaschine 100 angeordnet ist, liefert ein Signal N bezüglich der Drehzahl der Brennkraftmaschine. Die Motorsteuerung 175 stellt ein Signal QK bereit, das die einzuspritzende Kraftstoffmenge charakterisiert. Der Sensor 194 liefert ein Signal ML, das die der Brennkraftmaschine zugeführte Frischluftmenge charakterisiert. Der Sensor 191 liefert ein Signal TA, das die Abgastemperatur vor dem Abgasnachbehandlungssystem 115 charakterisiert. Anstelle des Sensors 191 können auch andere Sensoren, wie der Sensor 192 oder 193, die Signale bezüglich der Abgastemperatur im und/oder nach dem Abgasnachbehandlungssystem charakterisieren, bereitstellen.

Desweiteren stellt die Abgasnachbehandlungssteuerung 172 ein Signal DP bereit, das den Beladungszustand des Abgasnachbehandlungssystems 115 charakterisiert. Dieses Signal entspricht im wesentlichen der Partikelmenge im Abgasnachbehandlungssystem. Ferner ist ein Steller 104 vorgesehen, mit dem es möglich ist, die Sauerstoffmenge im Abgas zu reduzieren. So kann beispielsweise vorgesehen sein, dass eine Drosselklappe 104a oder ein Abgasrückführventil 104b entsprechend angesteuert werden kann.

Verschiedene Signale, die den Betriebszustand der Brennkraftmaschine charakterisieren, wie die Drehzahl N, die eingespritzte Kraftstoffmenge QK und die Frischluftmenge ML werden einer Sauerstoffmengenberechnung 200 zugeleitet. Diese liefert ein Signal 02, das den Sauerstoffgehalt des Abgases charakterisiert, an die Abbrandgeschwindigkeitsberechnung 210. Diese liefert ein Signal AV, das die Abbrandgeschwindigkeit im Abgasnachbehandlungssystem charakterisiert. Ferner wird der Abgasgeschwindigkeitsberechnung 210 ein Signal bezüglich der Abgastemperatur TA zugeleitet.

Verschiedene Signale, die den Betriebszustand der Brennkraftmaschine und des Abgasnachbehandlungssystems charakterisieren, wie die Frischluftmenge ML, die Abgastemperatur TA, die Partikelmenge DP und die Abbrandgeschwindigkeit AV werden einer Temperaturbestimmung 220 zugeleitet. Diese stellt einen Temperaturwert TF bereit, der die durch den Abbrand erreichbare Filtertemperatur oder die mögliche Temperaturerhöhung charakterisiert.

Dieses Signal TF gelangt zu einer Schwellwertabfrage 230, die wiederum ein Stellelement 104 ansteuert.

Ausgehend von verschiedenen Größen, die den Betriebszustand der Brennkraftmaschine charakterisieren, wie beispielsweise der Drehzahl N und der eingespritzten Kraftstoffmenge QK, und/oder der angesaugten Frischluftmenge ML berechnet die Sauerstoffmengenberechnung die Größe 02, die den Sauerstoffgehalt und/oder den Sauerstoffmassenstrom im Abgas charakterisiert.

Bei einer alternativen Ausgestaltung kann auch vorgesehen sein, dass diese Größe mittels eines Sensors, beispielsweise einer Lambda-Sonde im Abgas, direkt erfasst wird, bzw. dass in bestimmten Betriebszuständen die Größe direkt erfasst und in anderen berechnet wird.

Die Abbrandgeschwindigkeitsberechnung 210 berechnet ausgehend von der so ermittelten Größe 02, der Abgastemperatur TA und gegebenenfalls weiteren Größen, die den Zustand des Abgasnachbehandlungssystems charakterisieren, die Abbrandgeschwindigkeit.

Ausgehend von einer Größe DP, die die Partikelmenge, die im Abgasnachbehandlungssystem gespeichert ist, der Abgastemperatur TA, der Luftmenge ML und der Abbrandgeschwindigkeit AV berechnet die Temperaturberechnung 220 eine Größe TF, die der Temperatur im Abgastrakt entspricht, die durch die Oxidation erreicht werden kann, bzw. es wird eine Größe TF bestimmt, die die Temperaturerhöhung aufgrund der Oxidation charakterisiert.

Diese Größe TF wird in der Schwellwertabfrage 230 mit einem Schwellwert SW verglichen. Ist die Größe TF größer als der Schwellwert SW, wird ein Stellglied 104 derart angesteuert, dass sich die Sauerstoffkonzentration im Abgas reduziert. Dies bedeutet, die Sauerstoffkonzentration im Abgas wird reduziert, wenn die erwartete Temperaturerhöhung durch die Reaktion im Abgasnachbehandlungssystem größer als ein Schwellwert ist und/oder wenn die erwartete Temperatur, die voraussichtlich durch die Reaktion im Abgasnachbehandlungssystem erreicht wird, größer als ein Schwellwert ist.

Die Reduktion des Sauerstoffgehalts erfolgt vorzugsweise durch eine Erhöhung der Abgasrückführrate, eine drehmomentneutrale Späteinspritzung von Kraftstoff in den Brennraum, eine Kraftstoffzugabe in das Abgassystem, eine Androsselung des Motors durch eine Drosselklappe und/ oder durch eine Kombination dieser verschiedenen Maßnahmen.

## Patentansprüche

1. Verfahren zur Steuerung einer Brennkraftmaschine (100), die einen in einem Abgasnachbehandlungssystem (115) angeordneten Partikelfilter enthält, bei dem ein Regeneriervorgang zur Verminderung der Beladung des Partikelfilters vorgesehen ist, **dadurch gekennzeichnet, dass** eine Kenngröße (TF) in Abhängigkeit von wenigstens einer Betriebskenngröße (N, QK, ML, 02) der Brennkraftmaschine (100) und wenigstens einer Betriebskenngröße (AV, ML, TA, DP) des Partikelfilters ermittelt wird, welche eine zukünftige Intensität einer Reaktion im Partikelfilter charakterisiert, wobei bei Überschreiten eines Schwellenwertes (SW) durch die Kenngröße (TF) wenigstens eine Maßnahme ergriffen wird, welche die Sauerstoffkonzentration im Abgas der Brennkraftmaschine (100) vermindert, mit dem Ziel, dass die Kenngröße (TF) den Schwellenwert (SW) nicht erreicht.

2. Verfahren nach Anspruch 1, **dadurch gekennzeichnet, dass** die Kenngröße (TF) die erreichbare Temperatur oder die mögliche Temperaturerhöhung des Partikelfilters widerspiegelt, die durch die Reaktion im Partikelfilter bewirkt wird.

3. Verfahren nach Anspruch 1 oder 2, **dadurch gekennzeichnet, dass** die Kenngröße (TF) in Abhängigkeit vom Beladungszustand (DP) des Partikelfilters und/oder von der Abgastemperatur (TA) und/oder von der von der Brennkraftmaschine (100) angesaugten Luftmenge (ML) und/oder von der Abstandgeschwindigkeit (AV) der Partikel im Partikelfilter ermittelt wird.

4. Verfahren nach Anspruch 3, **dadurch gekennzeichnet, dass** die Abbrandgeschwindigkeit (AV) in Abhängigkeit von der Sauerstoffkonzentration (02) im Abgas der Brennkraftmaschine (100) und/oder in Abhängigkeit von der Abgastemperatur (TA) ermittelt wird.

5. Verfahren nach Anspruch 4, **dadurch gekennzeichnet, dass** die Sauerstoffkonzentration in Abhängigkeit von der Drehzahl (N) und/oder von der von der Brennkraftmaschine (100) angesaugten Luftmenge (ML) und/oder von der eingespritzten Kraftstoffmenge (QK) ermittelt wird und/oder dass die Sauerstoffkonzentration mit einem Sensor erfasst wird.

6. Verfahren nach einem der vorherigen Ansprüche, **dadurch gekennzeichnet, dass** als Maßnahme, welche die Sauerstoffkonzentration im Abgas der Brennkraftmaschine (100) vermindert, die von der Brennkraftmaschine (100) angesaugten Luftmenge (ML) vermindert wird und/oder dass der Brennkraftmaschine (100) eine Kraftstoffmenge (QK) Kraftstoff zugemessen wird, die keinen Beitrag zum Drehmoment liefert.

7. Vorrichtung zur Steuerung einer Brennkraftmaschine (100), die einen in einem Abgasnachbehandlungssystem (115) angeordneten Partikelfilter enthält, bei der ein Regeneriervorgang zur Verminderung der Beladung des Partikelfilters vorgesehen ist, **dadurch gekennzeichnet, dass** Mittel (220) vorgesehen sind, die eine Kenngröße (TF) in Abhängigkeit von wenigstens einer Betriebskenngröße (N, QK, ML, 02) der Brennkraftmaschine (100) und wenigstens einer Betriebskenngröße (AV, ML, TA, DP) des Partikelfilters ermitteln, welche eine zukünftige Intensität einer Reaktion im Partikelfilter charakterisiert, dass ein Vergleicher (230) vorgesehen ist, der die Kenngröße (TF) mit einem vorgegebenen Schwellenwert (SW) vergleicht und dass Mittel (104a, 180) vorgesehen sind zum Ergreifen wenigstens einer Maßnahme, welche die Sauerstoffkonzentration im Abgas der Brennkraftmaschine (100) vermindert, mit dem Ziel, dass die Kenngröße (TF) den Schwellenwert (SW) nicht erreicht.

## Claims

1. Method for controlling an internal combustion engine (100) which includes a particulate filter arranged in an exhaust-gas aftertreatment system (115), in which a regeneration operation is provided for lowering the loading level of the particulate filter, **characterized in that** a characteristic variable (TF) is determined as a function of at least one operating characteristic variable (N, QK, ML, 02) of the internal combustion engine (100) and of at least one operating characteristic variable (AV, ML, TA, DP) of the particulate filter, which characterizes a future intensity of a reaction in the particulate filter, with at least one measure which lowers the oxygen concentration in the exhaust gas from the internal combustion engine (100) being taken in the event of the characteristic variable (TF) exceeding a threshold value (SW), with a view to ensuring that the characteristic variable (TF) does not reach the threshold value (SW).

2. Method according to Claim 1, **characterized in that** the characteristic variable (TF) reflects the temperature which can be reached or the possible temperature increase of the particulate filter caused by the reaction in the particulate filter.

3. Method according to Claim 1 or 2, **characterized in that** the characteristic variable (TF) is determined as a function of the loading state (DP) of the particulate filter and/or of the exhaust-gas temperature (TA) and/or of the intake air quantity (ML) of the internal combustion engine (100) and/or of the burn-up rate (AV) of the particulates in the particulate filter.

4. Method according to Claim 3, **characterized in that** the burn-up rate (AV) is determined as a function of the oxygen concentration (02) in the exhaust gas from the internal combustion engine (100) and/or as a function of the exhaust-gas temperature (TA).

5. Method according to Claim 4, **characterized in that** the oxygen concentration is determined as a function of the engine speed (N) and/or of the intake air quantity (ML) of the internal combustion engine (100) and/or of the injected fuel quantity (QK), and/or **in that** the oxygen concentration is recorded using a sensor.

6. Method according to one of the preceding claims, **characterized in that** the measure which reduces the oxygen concentration in the exhaust gas from the internal combustion engine (100) involves reducing the intake air quantity (ML) of the internal combustion engine (100), and/or **in that** a fuel quantity (QK) of fuel which does not make any contribution to the engine torque is metered to the internal combustion engine (100).

7. Device for controlling an internal combustion engine (100) which includes a particulate filter arranged in an exhaust-gas aftertreatment system (115), in which a regeneration operation is provided for lowering the loading level of the particulate filter, **characterized in that** there are means (220) which determine a characteristic variable (TF) as a function of at least one operating characteristic variable (N, QK, ML, 02) of the internal combustion engine (100) and of at least one operating characteristic variable (AV, ML, TA, DP) of the particulate filter, which characterizes a future intensity of a reaction in the particulate filter, **in that** a comparator (230) is provided, which compares the characteristic variable (TF) with a predetermined threshold value (SW), and **in that** there are means (104a, 180) for taking at least one measure which lowers the oxygen concentration in the exhaust gas from the internal combustion engine (100), with a view to ensuring that the characteristic variable (TF) does not reach the threshold value (SW).

## Revendications

1. Procédé de gestion d'un moteur à combustion interne (100) comportant un filtre à particules installé dans un système de traitement en aval des gaz d'échappement (115), selon lequel il est prévu une opération de régénération pour réduire l'encombrement du filtre à particules,
**caractérisé en ce qu'**
on détermine un paramètre (TF) selon au moins une grandeur de fonctionnement (N, QK, ML, 02) du moteur à combustion interne (100) et au moins une grandeur de fonctionnement (AV, ML, TA, DP) du filtre à particules, caractérisant l'intensité future d'une réaction dans le filtre à particules et
en cas de dépassement d'un seuil (SW) par la grandeur caractéristique (TF) on prend au moins une mesure réduisant la concentration en oxygène dans les gaz d'échappement du moteur à combustion interne (100) avec pour objectif que la grandeur caractéristique (TF) n'atteigne pas le seuil (SW).

2. Procédé selon la revendication 1,
**caractérisé en ce que**
le paramètre (TF) représente la température susceptible d'être atteinte ou l'augmentation possible de la température du filtre à particules, température produite par la réaction dans un filtre à particules.

3. Procédé selon la revendication 1 ou 2,
**caractérisé en ce qu'**
on calcule le paramètre (TF) en fonction de l'état de charge (DP) du filtre à particules et/ou de la température des gaz d'échappement (TA) et/ou de la quantité d'air (ML) aspirée par le moteur à combustion interne (100) et/ou de la vitesse de combustion (AV) des particules dans le filtre à particules.

4. Procédé selon la revendication 3,
**caractérisé en ce qu'**
on détermine la vitesse de combustion (AV) en fonction de la concentration en oxygène (02) dans les gaz d'échappement du moteur à combustion interne (100) et/ou en fonction de la température des gaz d'échappement (TA).

5. Procédé selon la revendication 4,
**caractérisé en ce qu'**
on saisit la concentration en oxygène en fonction de la vitesse de rotation (N) et/ou de la quantité d'air (ML) aspirée par le moteur à combustion interne (100) et/ou par la quantité de carburant injectée (QK) et/ou de la concentration en oxygène saisie à l'aide d'un capteur.

6. Procédé selon l'une des revendications précédentes,
**caractérisé en ce que**
pour réduire la concentration en oxygène dans les gaz d'échappement du moteur à combustion interne (100) on réduit la quantité d'air aspirée (ML) par le moteur à combustion interne (100) et/ou on dose la quantité de carburant (QK) pour le moteur à combustion (100), pour ne pas générer un couple.

7. Dispositif de gestion d'un moteur à combustion interne (100) comportant un filtre à particules installé dans le système de posttraitement a des gaz d'échappement (115), et pour lequel il est prévu une opération de régénération pour réduire la charge du filtre à particules,
**caractérisé par**
- des moyens (220) qui déterminent la taille des grains (TF) en fonction d'au moins un paramètre de fonctionnement (N, QK, ML, 02) du moteur à combustion interne (100) et d'au moins un paramètre de fonctionnement (AV, ML, TA, DP) du filtre à particules, définissant l'intensité future d'une réaction dans le filtre à particules,
- un comparateur (230) qui compare la grandeur caractéristique (TF) reçue à un seuil prédéterminé (SW) et
- des moyens (104a, 180) pour prendre au moins une mesure permettant de réduire la concentration en oxygène dans les gaz d'échappement du moteur à combustion interne (100) pour que la grandeur caractéristique (TF) n'atteigne pas le seuil (SW).
